(19) **Europäisches Patentamt**

**European Patent Office**

**Office européen des brevets**

(11) Veröffentlichungsnummer : **0 358 735 B1**

(12) # EUROPÄISCHE PATENTSCHRIFT

(51) Int. Cl.$^5$ : **A01F 25/20**

(45) Veröffentlichungstag der Patentschrift :
**14.10.92 Patentblatt 92/42**

(21) Anmeldenummer : **89901934.3**

(22) Anmeldetag : **04.02.89**

(86) Internationale Anmeldenummer :
**PCT/DE89/00070**

(87) Internationale Veröffentlichungsnummer :
**WO 89/07388 24.08.89 Gazette 89/20**

---

(54) **VORRICHTUNG ZUM ABTRAGEN VON WENIGSTENS UNTER LAGERDRUCK ZUSAMMENGEPRESSTEM FUTTERGUT.**

---

(30) Priorität : **20.02.88 DE 3805300**

(43) Veröffentlichungstag der Anmeldung :
**21.03.90 Patentblatt 90/12**

(45) Bekanntmachung des Hinweises auf die
Patenterteilung :
**14.10.92 Patentblatt 92/42**

(84) Benannte Vertragsstaaten :
**AT BE DE FR GB IT NL**

(56) Entgegenhaltungen :
**EP-A- 15 823**
**DE-A- 2 435 137**
**DE-A- 3 602 403**
**FR-A- 2 496 413**

(73) Patentinhaber : **ASSFALG, Alois**
**Ortsstrasse 7**
**W-7932 Unterwachingen (DE)**

(72) Erfinder : **ASSFALG, Alois**
**Ortsstrasse 7**
**W-7932 Unterwachingen (DE)**

(74) Vertreter : **Braito, Herbert, Dipl.-Ing.**
**Patentanwalt Bahnhofstrasse 29**
**W-7950 Biberach 1 (DE)**

---

## Beschreibung

Die Erfindung betrifft eine Vorrichtung zum Abtragen von Futtergut aus einem Futterstock, Silo oder Preßkörper von dessen etwa lotrechter Stirnfläche her.

Unter Lagerdruck zusammengepreßtes Futtergut besteht vornehmlich aus Gräsern, Halmgut oder dergleichen. Mitunter wird es vor der Einlagerung geschnitten, Stroh etwa zu Häcksel und dergleichen, meist wird das Gut jedoch unmittelbar nach der Gewinnung eingelagert und in Abhängigkeit von der Höhe des Futterstocks einem erheblichen Druck ausgesetzt. Man erhält also eine große Dichte. Vor allem Siliergut wird mit der Dauer der Einlagerung zäher. Die einzelnen Gräser und Halme drücken meist backend gegeneinander und sind dann immer schwerer zu schneiden.

Zur weiteren Verwertung des so gelagerten Futters verwendet man meist Futter- oder Mischwagen, die an einer Stirnseite mit einem Walzenfräser versehen sind, der das Gut schichtweise von einer etwa lotrechten Stirnfläche des Futterstocks abträgt und in den Lagerraum des Wagens weitergibt. Dabei läßt sich kurzfaseriges Futter wie Häcksel nahezu problemlos behandeln. Schwierigkeiten ergeben sich jedoch bei der Entnahme von langfaserigem Futtergut. Solches Gut wird in der Regel nicht glatt geschnitten, sondern man zieht von der Schnittstelle her die Fasern nach, die teilweise zerrissen und zerquetscht werden und dadurch fester aneinander kleben, was wesentlich höhere Zerkleinerungsleistungen erfordert. Dies insbesondere dann, wenn es sich um zähes und unter auch backendes Siliergut handelt.

Die Erfindung geht aus von einer Vorrichtung zum Abtragen von wenigstens unter Lagerdruck zusammengepreßtem Futtergut aus einem Futterstock, Silo oder Preßkörper, von dessen etwa lotrechter Stirnfläche her, bestehend aus einer mit einer Trenneinrichtung und einer Abzugseinrichtung versehenen Abtrageeinheit, die an einer Trägereinheit gehalten und mittels dieser längs und quer zur Stirnfläche des Futterstocks bewegbar geführt ist, wobei die Trenneinrichtung wenigstens einen im wesentlichen senkrecht von der Stirnfläche des Futterstocks abziehenden Längsförderer (Längsfördertrommel 43) mit jeweils einem rotierenden Stirnschneidwerk aufweist.

Eine Vorrichtung dieser Art ist bekannt durch die DE-A-24 35 137. Dort ist an einer hochragenden Rahmenführung ein Schlitten mit sechs in der gleichen Ebene parallel angeordneten Schneidtrommeln vorgesehen, die an ihren freien Enden octogonale Schneidscheiben und ferner auf ihrem Mantel schraubenförmige Schneidelemente aufweisen. An den Enden der Trommelreihe sind zudem nach Art von Kettensägen ausgebildete Seitenschneidwerke zum Freischneiden des Stirnschneidbereiches angebracht.

Durch dieses Freischneiden wird einmal der Schnittwiderstand beim eigentlichen Stirnschneiden bzw. Abfräsen der Stirnfläche etwa eines Futtersilos herabgesetzt, was eine erste Steigerung der Schnittleistung mit sich bringt. Auch dort wird jedoch nur geringe Entlastung und Auflockerung des abgetrennten Gutes erreicht, das wiederum in herkömmlicher Weise nach unten in einen Trog fällt und von dort über eine Querschnecke durch einen Beschickungsförderer schräg nach oben transportiert wird. Soweit das Gut zwischenzeitig überhaupt aufgelockert wird, geht dieser Lockerzustand jedoch vor dem Einbringen in einen Lagerraum verloren.

Ausgehend von der vorerwähnten DE-A-24 35 137 ist es Aufgabe der Erfindung, ein weitergehendes Auflockern des Futtergutes nach dem Abtrennen und damit eine weitere Steigerung der Schneidleistung bei verringerter Antriebsleistung zu erzielen.

Dies wird mit den im kennzeichnenden Teil des Anspruchs 1 angeführten Mitteln erzielt, wonach das geschnittene Futtergut unverzüglich nach dem Abtrennen durch ein rotierbares Abzugsorgan wie eine quer zur Rotationsachse der Trenneinrichtung gelagerte Querfördertrommel mit einem Saugstrom unter einer die Trenneinrichtung und die Abzugseinrichtung überspannenden Abzugshaube in eine Förderströmung hochgeschleudert und zu einem rückseitigen Lagerraum gefördert wird. Beim "Hochschleudern" werden die einzelnen Haftkräfte zwischen benachbarten Faserelementen herabgesetzt oder ganz aufgehoben, wodurch diese Elemente entspannt, aufgelockert und nach dem Trennen aus dem Futterstock auch weitgehend von den einzelnen Nachbarelementen gelöst werden.

Da zudem die Trennebene etwa parallel zur Stirnfläche des Futterstocks liegt und das langfaseriges Gut erfahrungsgemäß überwiegend waagerecht parallel und etwa quer zur Stirnfläche gelagert wird, erfolgt der Schnitt großenteils widerstandsarm und glatt. Die so erforderlichen Schnittkräfte sind beherrschbar; dadurch wird ein Nachgären verhindert und dem Nachziehen von Fasergut unmittelbar entgegengewirkt.

Bekannt ist durch die DE-A-36 02 403 eine Abtragevorrichtung mit einem vor der Stirnfläche eines Futterstocks etwa senkrecht zu dieser verfahrbaren Grundgestell mit zwei hintereinander geschalteten Förderbändern, wobei das vordere durch einen Hydraulikzylinder um eine waagerechte Achse hochschwenkbar ist und dadurch eine Trenneinheit auf einer Bogenbahn an der Stirnfläche des Futterstocks entlangführt. Dort sind rotierende Schneidscheiben für Seitenschneidwerke eingesetzt, aber das Stirnschneidwerk begrenzt die Oberseite des flachem, langen und reibunssteigenden Förderkanals. Es kann kaum zum Längsvorschub in dem Förderkanal beitragen. Im übrigen muß dort ein verhältnismäßig langer Transportweg bis zur Übergabe des geschnittenen Futtergutes zurückgelegt werden, was der Entspannung und Auflockerung nicht zuträglich ist. Das Gut muß durch diesen ansteigenden Kanal regelrecht hochgedrückt und dadurch zusammengestaucht werden.

Bei einer weiteren bekannten Abtragevorrichtung gemäß der DE-A-31 14 589 befindet sich der schneidaktive Teil in einem lotrechten Schacht, wird in diesem bei einem Schnitt aus einer oberen Endstellung nach unten bewegt und trennt nach Anheben und seitlichem Versetzen über eine benachbarte Futtersäule diese auf lotrechter Bahn zerkleinernd vom Futterstock ab. Das Gut fällt dabei zunächst auf den Boden eines Schneidraumes, in dem eine mit Messern besetzte Walze umläuft. Dann wird es mit einem Schraubenförderer in den Einwirkungsbereich eines Gebläses gebracht, das es über einen weiteren Schacht einsaugt und mit konzentriertem Strom senkrecht nach oben auswirft. Dabei wird das Futtergut einem begrenzten Verdichtungseffekt ausgesetzt, aber kaum aufgelockert.

Nach einem anderen bekannten Vorschlag gemäß der EP-A-0 015 823 ist eine Schneidwelle, an deren freiem Ende eine Schneidscheibe sitzt, um eine waagerechte Querachse schwenkbar, damit auf einer Bogenbahn zwei etwa parallele Nuten in die Stirnfläche eines Futterstocks eingeschnitten werden. Dabei wird die abgetrennte Futtermenge durch eine auf der Schneidwelle sitzende Schraubenwendel soweit vorgefördert, bis sie in den Aufnahmeraum eines Futterwagens fällt. Die Führung des Stirnschneidwerkzeuges am freien Ende des verhältnismäßig langen Trägerhebels ist bei den dort vorgesehenen Winkelhebelkonstruktionen recht ungenau. Dies steht der Ausführung eines glatten exakten Schnittes und der hier angestrebten Minderung des Arbeits- und Leistungsumfanges entgegen.

Bei einer weiteren Ausführungsform der Erfindung ist wenigstens eine von der Stirnfläche des Futterstocks quer abfördernde Längsfördertrommel vorgesehen, die drehbar auf einem axial vorragenden Lagerarm sitzt, ein Stirnschneidwerk und mindestens eine durchgehende oder aus Teilstücken gebildete Schneckenwendel aufweist. Vergleichbare Vorrichtungen sind zwar an sich bekannt; sie lassen sich hier aber besonders zweckmäßig einsetzen, wenn Schneidwerke mit einer Reihe Rotationsmesser eingesetzt sind.

Es lassen sich auch Kreismesser und Längsfördertrommel getrennt lagern und mit unterschiedlichen Drehgeschwindigkeiten antreiben.

Dies ist besonders vorteilhaft, wenn Mittel zur insbesonderen selbsttätigen stufenlosen Änderung der Relativ-Drehgeschwindigkeit von Kreismesser und Längsfördertrommel zur Anpassung an verschiedenartige Einsatzzwecke vorgesehen sind.

Bei einer weiteren Ausführungsform der Erfindung werden zwei Stirnschneidwerke in waagerechter Richtung gegensinnig hin- und hergehend entlang der Stirnfläche des Futterstocks geführt. Dabei konnte ohne sonderlichen Steuerungsaufwand eine beachtliche Leistungssteigerung erzielt werden.

Weitere Merkmale und Vorteile der Erfindung sind in den Unteransprüchen erfaßt und sollen anhand der Zeichnung ausführlicher erläutert werden. Es zeigen:

Fig. 1 eine teilweise geschnittene Seitenansicht einer erfindungsgemäßen Abtragevorrichtung in Richtung des Pfeiles I in Fig. 7 gesehen,

Fig. 2 eine Auszugsvergrößerung dieser Vorrichtung in der unteren Endstellung,

Fig. 3 eine vergrößerte Teildarstellung einer abgewandelten Abtrageeinheit mit Kreismesser und Schneckentrommel,

Fig. 4 eine Mehrzahl zusammengefaßter Einheiten aus Fig. 3 von oben gesehen,

Fig. 5 einen Schnitt durch diese Einheiten nach der Linie V-V in Fig. 4,

Fig. 6 einen solchen Schnitt nach der Linie VI-VI in Fig. 5,

Fig. 7 eine der Fig. 5 entsprechende Darstellung einer Abtragevorrichtung mit Abzugshaube und Seitenschneidwerken,

Fig. 8 eine Ansicht der Trennvorrichtung in Richtung des Pfeiles VIII in Fig. 7 gesehen,

Fig. 9 eine linear quer zur Drehachse hin und her verfahrbare Trenneinrichtung mit Stirnkreismesser,

Fig. 10 ein gegensinnig bewegtes Tandemaggregat in schematischer Darstellung entsprechend einer Ansicht von unten in Fig. 9,

Fig. 11 die Trenneinrichtung nach Fig. 9 mit hin- und hergehendem Schwenkantrieb,

Fig. 12 eine Trenneinrichtung mit Schneidketten aufweisenden Seitenschneidwerken,

Fig. 13 einen Längsschnitt einer Einscheiben-Abtragevorrichtung mit großem Stirnkreismesser und zwei Seitenschneidwerken mit kleineren Kreisscheibenmessern sowie Zentralantrieb durch einen einzigen Motor.

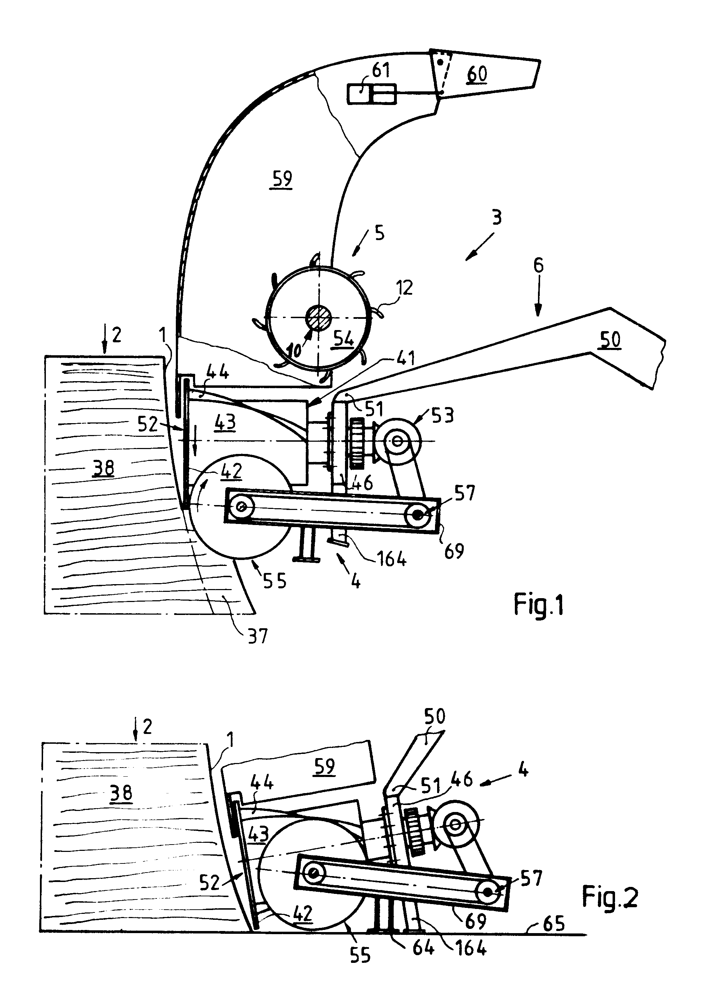

In Fig. 1 ist mit (1) die konkav gewölbte Stirnfläche eines Futterstockes (2) bezeichnet, der durch eine schematisch dargestellte Abtrageeinheit (3) von der Stirnfläche (1) her Schicht für Schicht abgetragen werden soll. Die Abtrageeinheit (3) weist hierzu eine Trenneinrichtung (4) und eine Abzugseinrichtung (5) mit Querfördertrommel (54) auf. Diese ist in an sich bekannter Weise wie eine schon früher an dieser Stelle angesetzte Frästrommel durch ein Gestänge (6) in nicht weiter gezeigter Weise so geführt, daß die ganze Abtrageeinheit etwa um einen Gelenkpunkt an einem nur zum Teil dargestellten Futterwagen so verschwenkt werden kann, daß die Stirnfläche (1) in der dargestellten Form konkav immer wieder nachgefahren wird. Dabei kann der Vorschub durch Bewegen des Futterwagens oder aber auch durch Veränderungen am Gestänge (6) bewirkt werden.

Die Querfördertrommel (54) sitzt zum Beispiel drehbar in Lagern (10) des Gestänges (6). Sie trägt an ihrem Umfang entweder axial verlaufende durchgehende Leistenvorsprünge oder kurze Radialvorsprünge (12), die ebenfalls axial verlaufen, aber auch im gleichen Axialbereich, also auf dem gleichen Umlaufkreis, in der gleichen Weise zur Mantelrichtung schräggestellt sein können. Diese Schrägstellung kann sich jedoch von einem Axialabschnitt zum nächsten ändern, was beim Fortschaffen des gelösten Gutes ein weiteres Auflockern und Vermischen zur Folge hat.

Das zunächst durch die Lagerung festgepreßte Gut wird durch die Abtrennung von den Verbindungskräften zum benachbarten Gut des Futterstocks entlastet und kann sich entspannen und auflockern. In der Regel wird es unmittelbar umgelenkt und von der Querfördertrommel (54) mittels deren Radialvorsprüngen und dem von diesen ausgeübten Saugstrom nach oben gesaugt und in Richtung des Pfeiles (34) in den Innenraum des Futterwagens geleitet, wobei sich das Gut weiter auflockert und danach besser handhaben läßt.

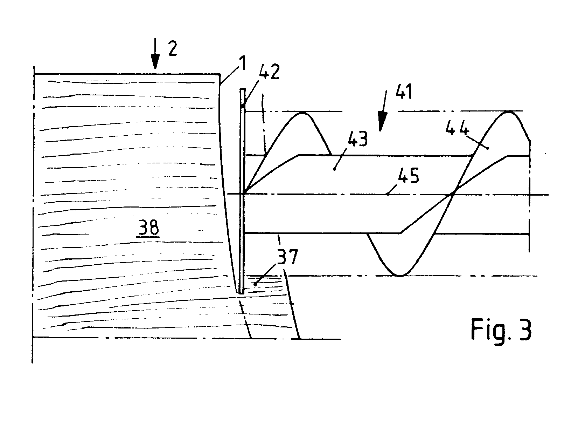

Nach Fig. 3 ist ein einstückiges Abtrageelement (41) aus einem etwa lotrecht angeordneten Kreismesser (42) und einer zentrisch mit diesem verschweißten axialen Fördertrommel (43) vorgesehen, die eine Schneckenwendel (44) trägt. Das Futtergut (38) liegt auch innerhalb der Schicht (37) etwa waagerecht und möglichst in Richtung der Trommelachse (45). Es wird also beim abwechselnden Heben und Senken der Trenneinrichtung (4) weitgehend exakt quer zur Faserrichtung abgetrennt und unverzüglich von der Schneckenwendel (44) erfaßt und in den Laderaum des Futterwagens weitergefördert.

Figur 3 zeigt einen Längsschnitt durch eine selbständige Abtrageeinheit (3), die als vielseitig verwendbarer Modul für unterschiedliche Einsatzzwecke gedacht ist. Diese Einheit weist ein rohrförmig ausgesteiftes Gehäuse (101) auf, das das Kegelrad-Differentialgetriebe (103) umschließt, und an dem unten der Antriebsmotor (M) angeflanscht ist. Das Kegelradgetriebe verteilt die vom Motor (M) aufgebrachte Leistung auf eine Welle (104), die an eine große Fördertrommel (431) und ein ebenfalls großes Kreismesser (421) angeschlossen ist, und eine quer durchlaufende Welle (105). Deren beide Enden treiben jeweils in einem schmalen Kettenkasten (106) mittels einer Zahnkette (107) ein Kettenrad (108) an, das fest auf einer Abtriebswelle (109) sitzt, die auf ihrem Innenende ein Kreismesser (42) eines Seitenschneidwerkes (55) trägt.

Diese Trenneinheit besteht aus nur wenigen Einzelteilen, ist preiswert herzustellen, robust und kann vielseitig eingesetzt werden. Die Größe dieses Aggregats ist vornehmlich durch die Abmessungen des im Stirnschneidwerk (521) angesetzten Kreismessers (421) bestimmt, aber die Schneidleistung des Stirnschneidwerkes wird dadurch erheblich gesteigert. Auch die Schneckenwendeln (44) können entsprechend vergrößert sein und stärkere Abzugsleistung bringen. Zudem bleibt der Vorteil des geringeren Kraftaufwandes und der kleineren Antriebsleistung erhalten.

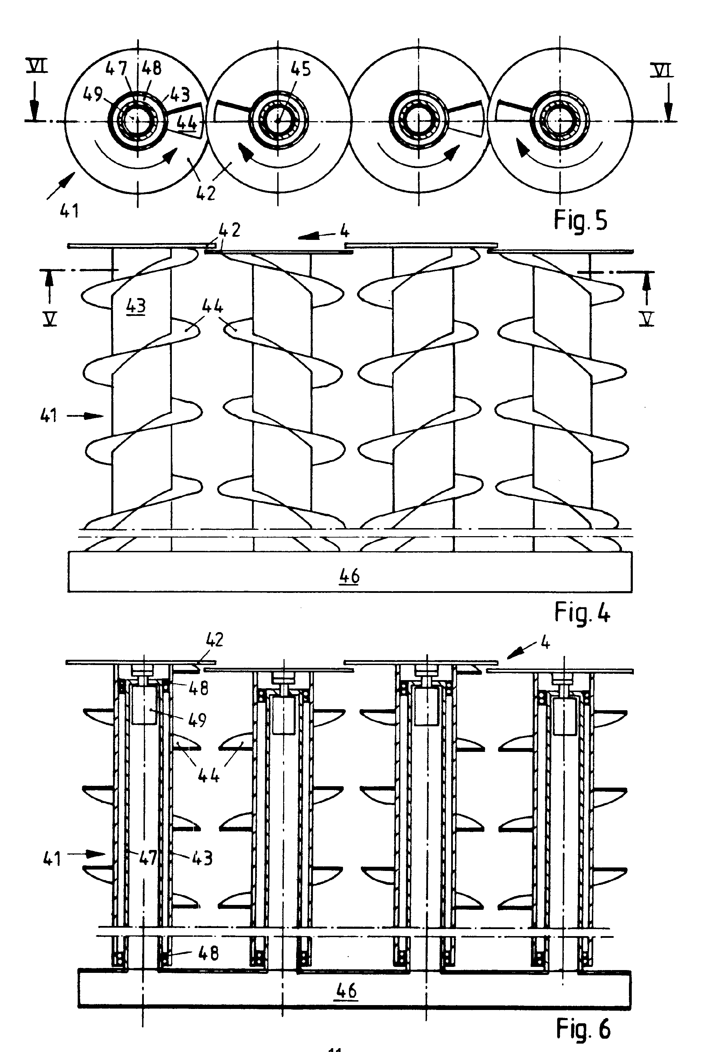

Zweckmäßigerweise ist, wie in den Figuren 4 bis 8 dargestellt, eine Reihe Abtrageelemente (41) nebeneinander angeordnet und ragen in oder entgegen der Fahrtrichtung von einem Trägerbalken (46) des Futterwagens weg. Wie die Figuren 4 und 6 erkennen lassen, sind die Kreismesser (42) abwechselnd etwas vor- und zurückversetzt. Ihre Umlaufkreise überdecken sich teilweise, wie dies auch Fig. 5 erkennen läßt. Zusätzlich können seitlich der äußeren Kreismesser (42) zwei weitere Kreismesser in lotrechter Ebene zur Begrenzung des Eingriffschnitts angebracht sein, um ein Auflockern des Lagergutes zu verhindern.

Zur Lagerung der Fördertrommeln (43) dienen fest am Trägerbalken (46) angebrachte rohrförmige Lagerarme (47), auf deren Umfang die Fördertrommeln mittels je zweier Doppelwälzlager (48) gelagert sind.

Im freien Ende eines jeden Lagerarmes (47) ist ein Strömungsmittelmotor, insbesondere ein Hydraulikmotor (49) angebracht, der das Kreismesser (42) antreibt. Die Motorwelle kann fest, über eine Kupplung oder gar ein Untersetzungsgetriebe an das Kreismesser angeschlossen sein. Grundsätzlich lassen sich auch das Kreismesser (42) und die Fördertrommel (43) am Lagerarm (47) direkt lagern, aber mit unterschiedlichen Drehgeschwindigkeiten antreiben. Im Prinzip können beide Teile einen eigenen Antriebsmotor erhalten oder aber mit unterschiedlicher Übersetzung an den gemeinsamen Motor (49) angeschlossen sein.

Es kann auch in eine Seite des Dreiecks vom Kreismesser (42) über die Fördertrommel (43) zum Hydraulikmotor (49) ein insbesondere stufenloses Übersetzungs-Änderungsgetriebe bekannter Bauweise eingeschaltet sein, um zum Beispiel das Kreismesser (42) mit größerer Geschwindigkeit als die Fördertrommel (43) umlaufen zu lassen. Stets können die Verbindungsleitungen für das Antriebsmedium durch den hohlen Trägerbalken (45) hindurch zu einer Strömungsmittelquelle geführt werden.

Anstelle einer durchgehenden Schneckenwendel (44) können auch einzelne in Zwischenabständen vorgesehene Wendelteile oder dergleichen auf einer einzigen oder auf einer mehrgängigen Schraubenkurve angebracht sein. Auch diese der Förderung dienenden Teile können mit verschiedenartig gestalteten Schneiden versehen werden. Die Kreismesser lassen sich etwa unter dem gleichen Anstellwinkel anordnen, zumal man einen Schnitt quer zur Faserrichtung anstrebt. Soweit Betriebswerte während des Schnittes geändert werden

EP 0 358 735 B1

sollen, kann dies nach selbsttätig vorgegebenen Daten, insbesondere nach Tastwerten aus der Beschaffenheit des Futtergutes selbsttätig gesteuert werden. Bedeutsam bleibt stets ein möglichst wenig kraftaufwendiger Trennschnitt zum Ablösen der abzutragenden Schicht (37) vom Futterstock (2).

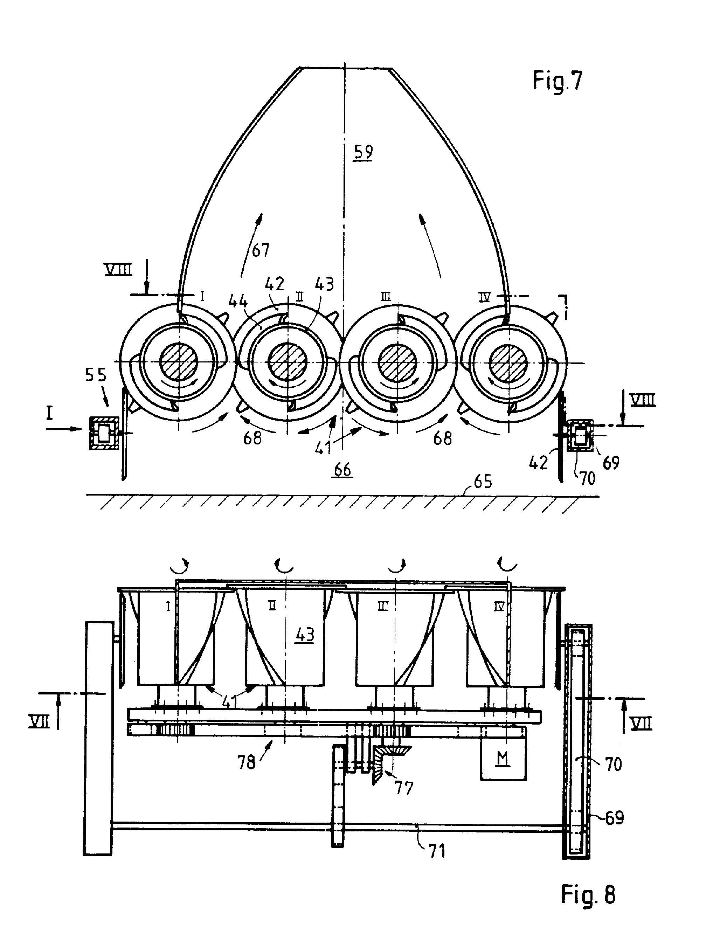

Die in den Figuren 7-10 gezeigte Vorrichtung unterscheidet sich von der vorbeschriebenen aus den Figuren 4-6 zunächst dadurch, daß die ganze Abtrageeinheit (3) mit Trenneinrichtung (4) und Abzugseinrichtung (5) am freien Ende (51) eines, um eine nicht gezeigte waagerechte Achse schwenkbaren Traghebels (50) gehalten ist, wobei einerseits die Kreismesser (42) eines Stirn-Schneidwerks (52) wiederum fest mit ihren Längsfördertrommeln (43) verbunden sind und diesen die nur wenig abgewandelte Querfördertrommel (54) nachgeschaltet ist.

Der Trägerbalken (46), der auch die Antriebseinrichtung (53) trägt, ist in nicht weiter gezeigter Weise mit der Abzugshaube (59) und mit an beiden Seiten angebrachten Getriebekästen (69) verbunden, die jeweils den Antriebszug (57) für ein Seitenschneidwerk (55) führen, das wiederum ein Kreismesser (42) aufweist.

Die Seitenschneidwerke (55) begrenzen dabei den Einschnittbereich in den Futterstock (2) auf beiden Seiten, sie "schneiden frei".

Das erleichtert wiederum das Ablösen der abzutragenden Gutteile, die von den gegensinnig umlaufenden Schraubenstegen (58) der Längsfördertrommeln (43) nach oben in die Abzugshaube (59) hineingeschleudert und durch deren angelenkte Endschute (60) mit gesteuerter Neigungseinstellung durch ein Zylinderaggregat (61) und dadurch mit regelbarer Richtung und Geschwindigkeit ausgelassen werden.

Unter den die Seitenschneidwerke (55) haltenden Getriebekästen (69) ist wenigstens ein Stelzfuß (64) angebracht, der durch Auftreffen auf den Boden (65) nach Figur 2 die Abwärtsbewegung der Seitenschneidwerke (55) begrenzt.

Ein weiterer Stelzfuß (164), der gegenüber dem ersten Stelzfuß (64) um ca. 20 cm zurücksteht und am Trägerbalken (46) befestigt ist, begrenzt den Absetzweg der ganzen Trenneinrichtung (4). Auf diese Weise wird die aus dem Futtergut (38) über die Stellfläche (1) vorstehende Schicht (37) schon durch die Seitenschneidwerke (55) seitlich abgetrennt, bevor die Stirnschneidwerke (52) bis in Bodennähe gelangen und dort angehalten werden. So wird einmal das Eindringen der Seitenschneidwerke (55) in den Boden verhindert und zum anderen das zuvor schon abgelöste Gut weitergefördert.

Wie beide Figuren 1 und 2 zeigen, übergreift die Wandung der Abzugshaube (59) den oberen Rand des Kreismessers (42) des Stirnschneidwerkes (52). Dies kann in analoger Weise mit den Stirnmessern der Seitensschneidwerke (55) geschehen.

In den Figuren 7 und 8 sind die lotrechten Axialebenen der vier Fördertrommeln (43) mit I,II,III und IV definiert. Figur 7 läßt dabei erkennen, daß das linke Trommelpaar (43-I/II) ebenso wie das rechte Trommelpaar (43-III/IV) aus den Bodenraum (66) heraus gemäß den Pfeilen (67) nach oben fördert. Am Außenrand fördern die Trommeln (43-I,IV) ebenso nach unten wie die Fördertrommeln (43-II,III) an ihrem Zwischeneingriff.

Vor allem der Eingriff zwischen I-II und auch III-IV ist verhältnismäßig eng, der Zwischenabstand zwischen den Außenrändern der Schneckenwendeln (44) ist sehr klein gehalten, etwa in der Größenordnung von 10mm. Auf diese Weise wird das Gut fest erfaßt und mit grober Geschwindigkeit nach oben getrieben. Dadurch ergibt sich dort auch ein entsprechend großer Sog, der das etwa zwischen den Achsenebenen II/III in den Bodenraum (66) geförderte Gut gemäß den Pfeilen (68) unverzüglich wieder ansaugt und in Richtung der Pfeile (67) nach oben schleudert.

Dies gilt im wesentlichen auch für das außen nach abwärts geförderte abgeschnittene Gut, das anschließend nach innen geführt wird. Die Weiterförderung wird auch durch die Abschirmung mittels zweier dünner Getriebekästen (69) begünstigt.

Diese Getriebekästen nehmen identische Getriebezüge (70) auf, welche die Kreismesser (42) der Seitenschneidwerke (55) mittels einer rückseitig angeordneten querlaufenden Zwischenwelle (71) verbinden. Die vorgenannte Welle ist wiederum durch ein Zwischengetriebe (77) mit einem Getriebezug (78) verbunden, der die einzelnen Fördertrommeln (43) mit einem gemeinsamen Motor (M) verbindet. Dieses Trennaggregat kann nach Bedarf in unterschiedlichen Gehäusen bzw. Vorrichtungen eingesetzt werden.

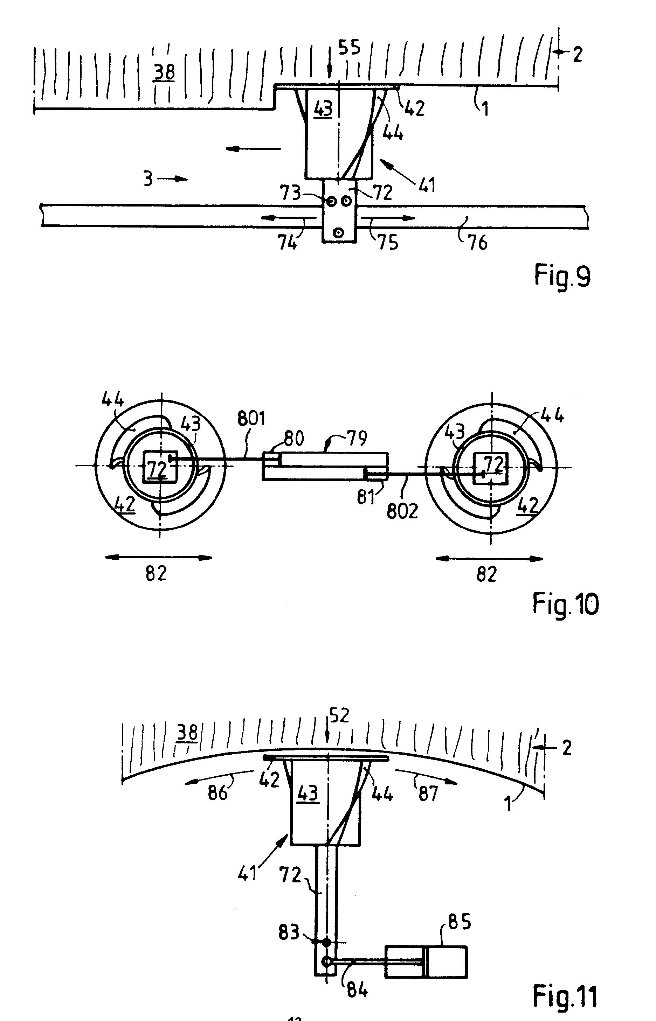

Figur 9 zeigt in schematischer Darstellung eine Abtrageeinheit (3) mit einer einzigen Fördertrommel (43), die nach den vorangehenden Darstellungen in den Figuren 7 und 8 fest verbunden ist mit dem Schneidwerk (55), das ein Kreismesser (42) aufweist. Auch die Schneckenwendel (44) ist hier übernommen. Die Fördertrommel sitzt drehbar auf einer Tragachse (72) und umschließt in nicht weiter gezeigter Weise ihren Drehantrieb.

Die Tragachse (72) ist mittels zweier Laufwerke (73) gemäß den Pfeilen (74,75) hin- und hergehend verfahrbar auf einer Schiene (76) geführt, die an sich wieder entlang der Stirnfläche (1) des Futterstockes (2) lotrecht oder annähernd lotrecht verfahrbar gehalten ist. Dabei kann in lotrechter Richtung kontinuierlich oder mäanderartig bzw. zeilenweise verfahren werden.

Nach der Darstellung in Figur 10 sind zwei Fördertrommeln (43) etwa der Ausführung nach Figur 9 waagerecht zueinander versetzt und durch ein doppeltes Zylinderaggregat (79) verbunden, das zwei entgegengesetzt wirkende Zylindermotoren (80,81) aufweist, deren Kolbenstangen (801,802) jeweils an den Tragachsen (72) der Fördertrommeln (43a,43b) angreifen, die etwa in der gleichen Weise wie nach Figur 9 auf einer Schiene (76) oder auf andere Weise so geführt sind, daß sich beide Fördertrommeln gemäß den Doppelpfeilen jeweils aufeinander zu und voneinander weg bewegen. Auf diese Weise wird ein wenigstens annähernd vollkommener Massenausgleich erzielt, so daß die Vorrichtung sehr ruhig arbeitet.

Figur 11 zeigt nun einen den Linearverstellungen gemäß den Figuren 9 und 10 entsprechenden Schwenkantrieb für eine Fördertrommel (43). Dabei ist die Tragachse (72) mit Abstand von ihrem freien Ende drehbar auf einer lotrechten Schwenkachse (83) gelagert und wird durch die Kolbenstange (84) des Schwenkzylinders (85) abwechselnd nach rechts und links verschwenkt. Dabei wird das Stirnschneidwerk (52) nach den Pfeilen (86,87) bewegt und gibt der Stirnfläche (1) des Futterstockes (2) die Form einer etwa lotrechten Zylinderfläche.

Die Lagerung der Tragachse (72) kann ebenso längs der lotrechten Schwenkachse (83) gehoben und gesenkt werden wie der Schwenkzylinder (85). Es können auch hier wieder mehrere sich in ihren Bewegungen ergänzende Schneidwerke bzw. Trenneinheiten eingesetzt werden, und man kann zwei Fördertrommeln auf ihrer Bogenbahn zum Massenausgleich gegeneinander schwingen lassen.

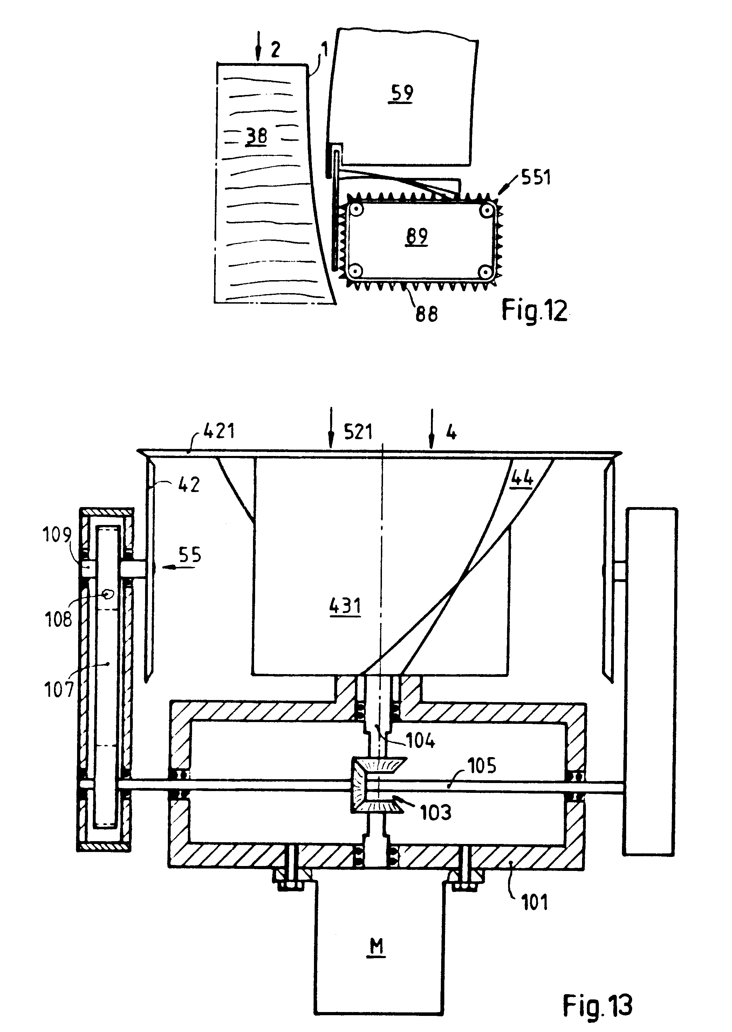

Gemäß Figur 12 ist ein Seitenschneidwerk (551) mit umlaufender Schneidkette (88) vorgesehen, die an den Ecken eines rechteckförmigen Schneidschwertes (89) gelagert ist.

## Patentansprüche

1. Vorrichtung zum Abtragen von wenigstens unter Lagerdruck zusammengepreßtem Futtergut aus einem Futterstock (2), Silo oder Preßkörper, von dessen etwa lotrechter Stirnfläche (1) her, bestehend aus einer mit einer Trenneinrichtung (4) und einer Abzugseinrichtung (5) versehenen Abtrageeinheit (3), die an einer Trägereinheit (50) gehalten und mittels dieser längs und quer zur Stirnfläche (1) des Futterstocks (2) bewegbar geführt ist, wobei die Trenneinrichtung (4) wenigstens einen im wesentlichen senkrecht von der Stirnfläche (1) des Futterstocks (2) abziehenden Längsförderer (Längsfördertrommel 43) mit jeweils einem rotierenden Stirnschneidwerk (52) aufweist, dadurch gekennzeichnet, daß eine quer zu ihrer Drehachse fördernde Trommel (Querfördertrommel 54) mit an ihrem Mantel angebrachten axial verlaufenden, leistenartigen Förderelementen (12) über der Trenneinrichtung (4) quer zu der Rotationsachse (45) der Trenneinrichtung gelagert ist, und daß mittels der Querfördertrommel (54) das durch die Trenneinrichtung (4) abgelöste Futtergut in einem Saugstrom nach oben unter eine die Trenneinrichtung (4) und die Abzugseinrichtung (5) überspannende Abzugshaube (59) in einer Förderströmung zu einem rückseitigen Lagerraum förderbar ist.

2. Vorrichtung nach Anspruch 1, dadurch gekennzeichnet, daß die Längsfördertrommel (43) mit dem Stirnschneidwerk (52), die drehbar auf einem axial vorragenden Lagerarm (47) sitzt, mindestens eine durchgehende oder aus Teilstücken gebildete Schneckenwendel (44) aufweist.

3. Vorrichtung nach Anspruch 1 oder 2, dadurch gekennzeichnet, daß wenigstens ein Seitenschneidwerk (55) gegenüber dem Stirnschneidwerk (52,521) nach rückwärts und unten versetzt angeordnet ist.

4. Vorrichtung nach einem der vorhergehenden Ansprüche dadurch gekennzeichnet, daß zwei rotierende Stirnschneidwerke (52) in waagerechter Richtung gegensinnig hin- und hergehend entlang der Stirnfläche (1) des Futterstocks (2) bewegbar geführt sind.

5. Vorrichtung nach Anspruch 1 oder 2, dadurch gekennzeichnet, daß Kreismesser (42) und Längsfördertrommel (43) der Trenneinrichtung getrennt gelagert und mit unterschiedlichen Drehgeschwindigkeiten antreibbar sind.

6. Vorrichtung nach Anspruch 1, dadurch gekennzeichnet, daß die Abzugshaube (59) schnabelartig gekrümmt und zu ihrem Auslaßende hin verjüngt ist.

7. Vorrichtung nach Anspruch 6, dadurch gekennzeichnet, daß am Auslaß der Abzugshaube (59) eine motorish verstellbare Endschute (60) zur Steuerung des Auslaß-Förderstomes vorgesehen ist.

**Claims**

1 An apparatus for the removal of fodder compacted at least under a storage pressure from a mass (2) of fodder, a silo or a pressed body, from the generally vertical end surface (1) thereof, comprising a removing unit (3) provided with a severing device (4) and a drawing off device (5), and which is held on a mounting unit (50) and is able to be movably guided by it along and transversely in relation to the end surface (1) of the mass (2) of fodder, the severing device (4) having at least one longitudinal conveyor (a longitudinal conveying drum 43) for removing fodder in a substantially vertical direction from the end surface (1) of the mass (2) of fodder and having respectively one rotating end-on cutting mechanism (52), characterized in that a drum (a transverse conveying drum 54) for conveying transversely in relation to its axis of rotation, is bearinged so that axially extending bar-like conveying elements (12), which are carried on its outer surface, arranged over the severing device (4) transversely in relation to the axis (45) of rotation of the severing device and in that by means of the transverse conveying drum (54) the fodder, which is detached by the severing device (4), is able to be conveyed in a suction current upwards underneath a draw off shroud (59), which shroud spans the severing device (4) and the drawing off device (5), in a conveying flow to a rear storage space.

2 The apparatus as claimed in claim 1, characterized in that the longitudinal conveying drum (43) with the end-on cutting mechanism (52), which is carried in a rotary manner on an axially projecting support bearer arm (47), has at least one worm (44) which is continuous or is made up of sections.

3 The apparatus as claimed in claim 1 or in claim 2, characterized in that at least one lateral cutting device (55) is arranged offset to the rear and downwards in relation to the end-on cutting mechanism (52 and 521).

4 The apparatus as claimed in any one of the preceding claims, characterized in that two rotating end-on cutting devices (52) are movably guided for movement in the horizontal direction oppositely and reciprocatingly along the end surface (1) of the mass (2) of fodder.

5 The apparatus as claimed in any one of the preceding claims, characterized in that circular knives (42) and the longitudinal conveying drum (43) of the severing device are separately bearinged from each other and are able to be driven with different speeds of rotation.

6 The apparatus as claimed in claim 1, characterized in that the draw off shroud (59) is curved like a beak and is tapered towards an outlet end thereof.

7 The apparatus as claimed in claim 6, characterized in that at the outlet of the draw off shroud (59) a motor-driven, adjustable end chute (60) is provided for control of the output conveying flow.


**Revendications**

1. Dispositif pour prélever du fourrage comprimé au moins sous la pression de stockage dans un stock de fourrage (2), un silo ou un élément pressé, sur une surface frontale (1) approximativement verticale du fourrage, le dispositif comportant une unité de prélèvement (3) pourvue d'un appareil de coupe (4) et d'un appareil d'évacuation (5), l'unité de prélèvement étant portée par une unité porteuse (50) et conduite par celle-ci de manière à se déplacer longitudinalement et transversalement par rapport à la surface frontale (1) du stock de fourrage (2), et où l'appareil de coupe (4) comporte au moins un convoyeur longitudinal (tambour 43) pourvu d'un organe de coupe frontal rotatif (52) et emportant le fourrage sensiblement perpendiculairement à la surface frontale (1) du stock (2), caractérisé en ce qu'un tambour (tambour convoyeur transversal 54), transportant transversalement par rapport à son axe de rotation et pourvu d'éléments convoyeurs (12) en forme de lames s'étendant axialement sur son enveloppe, est monté au-dessus de l'appareil de coupe (4), transversalement par rapport à l'axe de rotation (45) de l'appareil de coupe, et en ce qu'au moyen du tambour convoyeur transversal (54), le fourrage détaché par l'appareil de coupe (4) est transporté dans un courant aspirant vers le haut sous un capot d'évacuation (59) recouvrant l'appareil de coupe (4) et l'appareil d'évacuation (5), en un courant de transport vers une zone arrière de dépôt.

2. Dispositif selon la revendication 1, caractérisé en ce que le tambour convoyeur longitudinal (43), pourvu de l'organe frontal de coupe (52) et monté de manière rotative sur un bras de support (47) disposé axialement en porte-à-faux, comporte une hélice (44) continue ou formée d'éléments séparés.

3. Dispositif selon la revendication 1 ou 2, caractérisé en ce qu'au moins un organe de coupe latéral (55) est disposé dans une position décalée vers l'arrière et vers le bas par rapport à l'organe de coupe frontal (52, 521).

4. Dispositif selon l'une des revendications précédentes, caractérisé en ce que deux organes de coupe frontaux (52) sont conduits de manière à se déplacer en va-et-vient horizontalement dans des sens opposés le long de la surface frontale (1) du stock de fourrage (2).

5. Dispositif selon la revendication 1 ou 2, caractérisé en ce qu'un couteau circulaire (42) et le tambour convoyeur longitudinal (43) de l'appareil de coupe sont montés sur des paliers séparément et peuvent être entraînés à des vitesses de rotation différentes.

6. Dispositif selon la revendication 1, caractérisé en ce que le capot d'évacuation (59) est courbé en forme de bec et rétréci en direction de son extrémité de sortie.

7. Dispositif selon la revendication 6, caractérisé en ce qu'une coiffe (60) à réglage motorisé est prévue à la sortie du capot d'évacuation (59) pour guider le courant de transport sortant.

EP 0 358 735 B1

Fig.1

Fig.2

Fig. 3

Fig. 5

Fig. 4

Fig. 6

Fig.7

Fig. 8

EP 0 358 735 B1

Fig. 9

Fig. 10

Fig. 11

13

Fig.12

Fig.13